Europäisches Patentamt

European Patent Office

Office européen des brevets

(19)

(11) Veröffentlichungsnummer : **0 419 476 B1**

## (12) EUROPÄISCHE PATENTSCHRIFT

(45) Veröffentlichungstag der Patentschrift :
03.06.92 Patentblatt 92/23

(51) Int. Cl.⁵ : **F16C 39/06**

(21) Anmeldenummer : **89900240.6**

(22) Anmeldetag : **14.12.88**

(86) Internationale Anmeldenummer :
**PCT/EP88/01153**

(87) Internationale Veröffentlichungsnummer :
**WO 89/12178 14.12.89 Gazette 89/29**

(54) LAGER ZUR RADIALEN UND AXIALEN LAGERUNG EINES ROTORS MIT GROSSER RADIALER
AUSDEHNUNG.

(30) Priorität : **06.06.88 DE 3819205**

(43) Veröffentlichungstag der Anmeldung :
**03.04.91 Patentblatt 91/14**

(45) Bekanntmachung des Hinweises auf die
Patenterteilung :
**03.06.92 Patentblatt 92/23**

(84) Benannte Vertragsstaaten :
**FR GB IT**

(56) Entgegenhaltungen :
**EP-A- 0 185 765**
**EP-A- 0 201 894**
**DE-A- 3 241 507**
**FR-A- 2 149 644**
**FR-A- 2 572 141**

(56) Entgegenhaltungen :
**GB-A- 2 011 658**
**GB-A- 2 129 582**
**Patent Abstracts of Japan, Vol.8,No.234**
**(M-334)(1671) 26 October 1984, &JP,A**
**59113315 (YASUKAWA DENKI SEISAKUSHO**
**K.K.) 30June 1984; seethe whole document**

(73) Patentinhaber : **TELDIX GmbH**
**Grenzhöfer Weg 36 Postfach 105608**
**W-6900 Heidelberg 1 (DE)**

(72) Erfinder : **BICHLER, Udo, Jörg**
**Botheplatz 60**
**W-6900 Heidelberg 1 (DE)**

(74) Vertreter : **Wiechmann, Manfred, Dipl.-Ing.**
**ANT Nachrichtentechnik GmbH**
**Patentabteilung Gerberstrasse 33**
**W-7150 Backnang (DE)**

**Beschreibung**

Die Erfindung betrifft ein Lager zur radialen und axialen Lagerung eines Rotors mit großer radialer Ausdehnung gemäß den Merkmalen des Anspruchs 1.

Aus der DE-A-32 43 641 ist bekannt, daß für Rotoren großer radialer Ausdehnung mechanische Lager, aber auch elektrodynamische Magnetlager verwendbar sind.

Ebenfalls aus dieser Schrift ist bekannt, bei Rotoren großer radialer Ausdehnung auch die Kippachsen des Rotors zu regeln, um zum einen Störmomenten und Eigenfrequenzen wirksam begegnen zu können, zum anderen um bestimmte Momente zu erzeugen, die in der Art von Kreiselmomenten eine Verschwenkung des Systems bewirken.

Aus der DE-A-32 40 809 ist ein Magnetlager bekannt, bei dem der Luftspalt durchmesser groß gegenüber der axialen Länge des Lagers ist. Der Rotor ist durch Permanentmagnete zumindest auf der Rotorseite radial passiv gelagert, während die axiale Lage des Rotors durch eine Regeleinrichtung aktiv geregelt wird. Zur Bestimmung der axialen Lage des Rotors werden mehrere Sensoranordnungen sowie Regelverstärker und Wicklungen zur Ausübung von Kräften auf den Rotor verwendet Vier Sensoranordnungen sind auf zueinander senkrechten und zur Drehachse senkrecht stehenden Achsen paarweise diametral zur Drehachse liegend angeordnet. Es sind drei Regelverstärker vorgesehen, von denen dem ersten und zweiten jeweils die Differenz der Sensorsignale sich diametral gegenüberliegender Sensoranordnungen und dem dritten die Summe aller Sensorausgangssignale zugeführt werden Die Ausgänge der Regelverstärker sind mit Wicklungen derart verbunden und die Wicklungen derart angeordnet, daß bei Ansteuerung des ersten und zweiten Verstärkers auf den Rotor Rückstellmomente um die zu der Achse, auf der die zugehörigen Sensoranordnungen liegen, jeweils senkrecht liegenden Achse einwirken und daß bei Ansteuerung des dritten Verstärkers eine axiale Rückstellkraft auf den Rotor einwirkt.

Weiter ist aus dieser Schrift bekannt, daß die Eingangssignale des ersten und zweiten Regelverstärkers kreuzgekoppelt sind, dh, ein Teil des Eingangssignals des einen Verstärkers wird dem Eingangssignal des anderen Verstärkers überlagert.

Aus der DE-A-32 41 507 ist ein Steuersystem für eine magnetische Lagereinrichtung mit einer Kreuzkopplung bekannt Ziel dieser Kreuzkopplung ist es, Präzessions- und Nutationsschwingungen zu dämpfen. Die Aufgabe der Erfindung besteht darin, ein Regelverfahren und ein Magnetlager zu schaffen, zur radialen und axialen Lagerung von Rotoren mit großer radialer Ausdehnung, die in einem weiten Drehzahlbereich arbeiten und auch für sogenannte "mikro-g""-Umgebungen ohne Probleme anwendbar sind.

Diese Aufgabe wird durch die im ersten und zweiten Patentanspruch angegebenen Merkmale gelöst.

Vorteile dieser Erfindung bestehen in der Möglichkeit des aktiven Verschwenkens der Kippachsen zur Erzeugung von Drehmomenten in der zur Drehachse und zur aktiv gaschwenkten Kippachse senkrechten zweiten Kippachse ohne weiteren Aufwand durch das Regelprinzip sowie in der Verwendung des Lagers bei Rotoren geringer Höhe.

Weitere Vorteile ergeben sich aus den Unteransprüchen und aus der Baeschreibung. So ergibt sich z.B. aus den Ansprüchen 6 bis 9 und 24 eine, im Zusammenhang mit der Regelung gemäß den Ansprüchen 1 bis 5, besonders günstiges Ausführunssbeispiel des Lagers, welches aber auch unabhängig von der erfindungsgemäßen Regelung mit anderen Regelungsprinzipien verwendbar ist. Aus den Ansprüchen 17 und 18 ergibt sich eine durch die Überwachungsschaltung mögliche Umschaltung bei einem fehlerhaften Abstandssensor oder bei einer fehlerhaften Reglerspule, so daß die Funktionsfähigkeit des Lagers auch nach deren Ausfall erhalten bleibt.

Der Vorteil einer besonderen Ausführung der Erfindung, gemäß Anspruch 23, besteht darin, daß die Regelung für das aktive Zentrallager umschaltbar ist. Sind starke radiale Störungen zu erwarten, wie sie bei Manövern des Raumflugkörpers auftreten können, so wird eine "harte" Regelung verwendet.

Wird das Lager dagegen in "mikro-g"-Umgebung betrieben, so wird eine 'weiche' Regelung bevorzugt.

Die Erfindung wird nachfolgend anhand mehrerer Ausführungsbeispiele näher erläutert.

Es zeigen

Fig. 1 eine senkrechte Schnittdarstellung des Lagers mit Regel- und Steuereinheit,

Fig. 2 einen linken Ausschnitt aus der senkrechten Schnittdarstellung des Lagers nach Fig. 1 als Detaildarstellung,

Fig. 3 die Anordnung der vier Regelspulen,

Fig. 4 das detaillierte Regelprinzip in einem Blockschaltbild, mit nicht drehzahlabhängiger Änderung der Kippregler-Parameter,

Fig. 5 das detaillierte Regelprinzip einer Weiterbildung in einem blockschaltbild mit drehzahlabhängiger Änderung.der Kippregler-Parameter,

Fig. 6 eine Dämpferspule in einer Abwicklung,

Fig. 7 eine Weiterbildung des Lagers nach Fig. 1 mit aktivem Zentrallager,
Fig. 8 eine waagerechte Schnittdarstellung des aktiven Zentrallagers nach Fig. 7,
Fig. 9 das Regelprinzip einer Achse des aktiven radialen Zentrallagers.

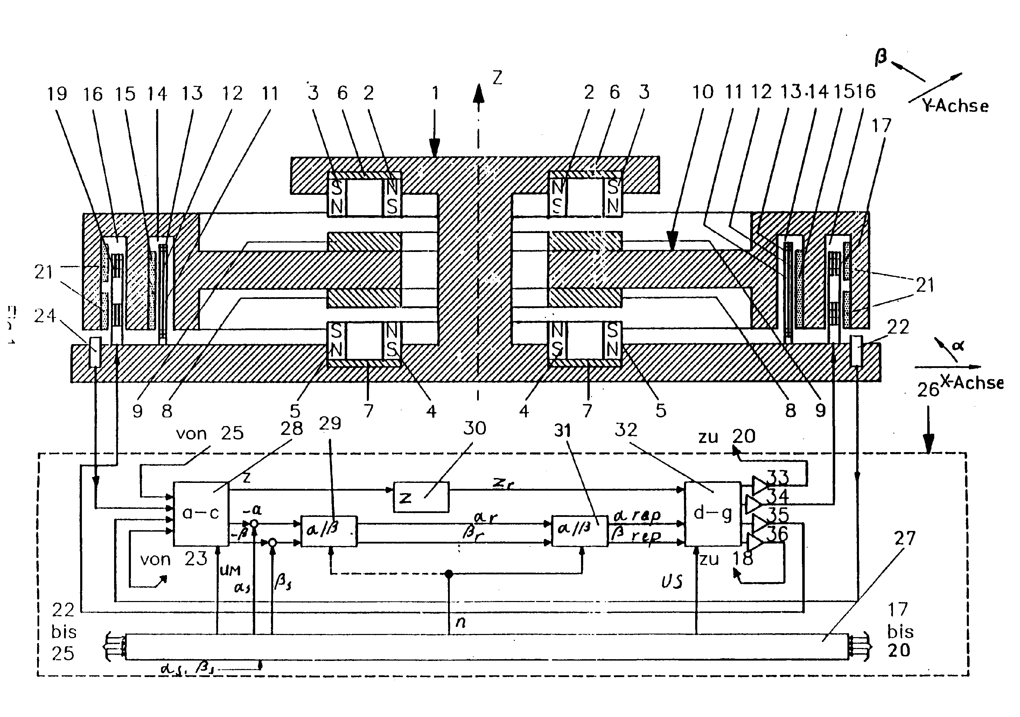

In Fig. 1 ist mit 1 der Stator, mit 10 der Rotor und mit 26 die Steuer- und Regeleinheit bezeichnet.

Der Stator 1 trägt zentral axial versetzt jeweils zwei axial magnetisierte Permanentmagnetringe 2 bis 5 mit den zugehörigen ringförmigen Jochplatten 6, 7 aus weichmagnetischem, hochpermeablem Material. Auf dem Rotor 10 befinden sich dazugehörige Rückschlußringe 8, 9 ebenfalls aus weichmagnetischem, hochpermeablem Material. Die Permanentmagnetringe 2 bis 5 bilden zusammen mit den Jochplatten 6, 7 und den Rückschlußringen 8, 9 ein axial (in Z-Richtung) instabiles, radial in( X- und Y-Richtung) stabiles passives Magnetlager Durch die Wahl geeigneter Verhältnisse von Durchmesser der Permanentmagnetringe 2 bis 5 und Abstand der Luftspalte wird die passive Kippsteifigkeit zu Null eingestellt.

Am äußeren Umfang des Rotors 10 befinden sich zwei ringförmige Luftspalte 14, 16.

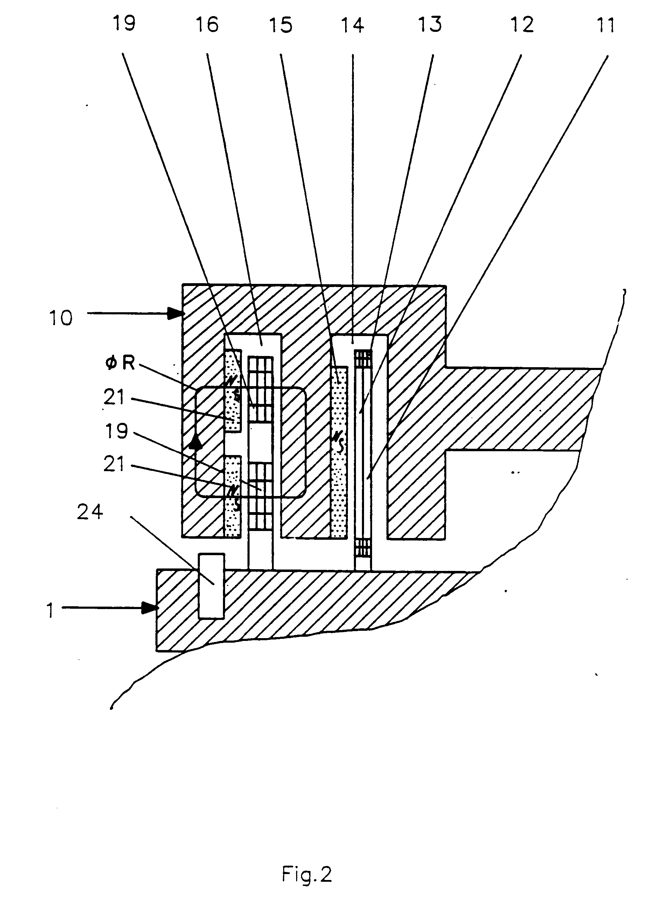

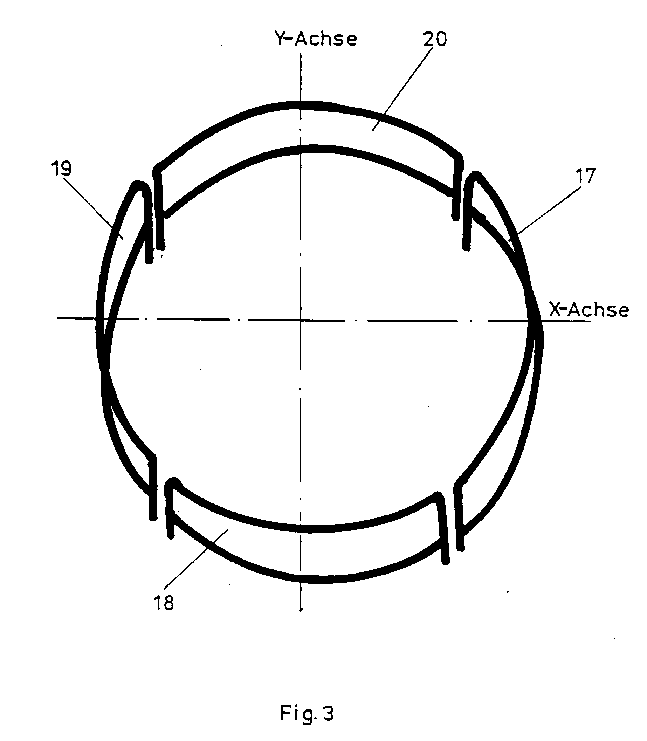

Der äußere Rotorluftspalt 16 dient zur Erzeugung von axialen Kräften (in Z-Richtung) und Drehmomenten (im α- und ß- Drehsinn). Zu diesem Zweckbefindensich am äußeren Radius des Rotorluftspaltes 16 zwei entgegengesetztradial magnetisierte Permanentmagnetringe 21, die einen magnetischen Fluß $\varnothing$R siehe( Fig. 2)in der dargestellten Weise erzeugen. Am Stator 1 sind vier Regelspulen 17 bis 20 (siehe auch Fig. 3) angeordnet,die in den äußeren Rotorluftspalt 16 so eintauchen, daß sie sich größtenteils im Feld der Permanentmagnetringe 21 befinden. Die Regelspulen 17 bis 20 erstrecken sich jeweils über 90 Grad des mittleren äußeren Rotorluftspaltumfanges.

Der innere Rotorluftspalt 14 dient zur Erzeugung von axialen Drehmomenten (um die Z-Achse) und von radialen Kräften (in X- und Y-Richtung). Zu diesem Zweck befindet sich am äußeren Radius desinneren Rotorluftspaltes 14 ein in Umfangsrichtung alternierend radial magnetisierter Permanentmagnetring 15. Am Stator 1 sind eine Dämpferspule 11 und eine Motorspule 12 angeordnet, die in den inneren Rotorluftspalt 14 so eintauchen,daß sich nur die in Z-Richtung verlaufenden Spulenteile im Feld des Permanentmagnetringes 15 befinden. Die Spulen 11, 12 erstrecken sich über den gesamten mittleren inneren Rotorluftspaltumfang. Zusammen mit dem Permanentmagnetring 15 bildet die Spule 12 einen eisenlosen, elektronisch zu kommutierenden Gleichstrommotor.

Die Dämpferspule 11 ist kurzgeschlossen und so verschaltet, daß bei Drehung des Rotors 10 um die Z-Achse kein bremsendes Drehmoment entsteht, jedoch bei einer translatorischen Bewegung des Rotors 10 in X- oder Y-Richtung jeweils in der Dämpferspule 11 durch das Feld des Permanentmagnetringes 15 Spannungen so induziert werden, daß Ströme und damit Kräfte entstehen,die der jeweiligen bewegungsrichtung entgegenwirken. Die Dämpferspule 11 bildet daher zusammen mit dem Permanentmagnetring 15 eine passive radiale Dämpfungseinrichtung.

Die axiale Auslenkung des Rotors 10 in Z-Richtung wird von vier berührungslos arbeitenden Abstandssensoren 22 bis 25 erfasst, die in jeweils 90 Grad Abstand auf den X- und Y- Achsen des Stators 1 angeordnet sind.

Durch geeignete Verknüpfung der Signale der vier Abstandssensoren 22 bis 25 in der Additionseinheit 28 werden redundant die axiale Auslenkung z und beide Kippwinkel α und ß des Rotors 10 gewonnen. Durch ein Umschaltsignal UM, das in einer Plausibilitätskontrolle der vier Abstandssensorsignale in der Adaptions- und Uberwachungseinheit 27 entsteht, wird im Falle einer Störung einer der vier Abstandssensoren 22 bis 25 auf eine Istwerterfassung mit den jeweils verbleibenden drei Abstandssensoren umgeschaltet, wobei die gleichen Eingangssignale α, β, z für die Regler 29,30 erzeugt werden müssen.

Der axiale Istwert z wird einem Proportional-Differential-Regler mit überlagerter Zero-Power-Regelung 30 zugeführt, der daraus ein axiales Stellsignal zr erzeugt.

Die beiden Kippwinkelistwerte α, ß werden,mit den jeweiligen Sollwerten $\alpha_s$, $\beta_s$ verknüpft, den Proportional-Differential-Kippreglern 29 zugeführt, die daraus die Signale αr und ßr erzeugen.

Die Ausgangssignale αr und βr der Kippregler 29 werden in einer Entkopplungseinrichtung 31, die die durch die Kreiseleffekte verursachte Verkopplung der Kippachsen X, Y des Rotors 10 aufhebt, zu den Signalenαrep und βrep verarbeitet . Die Parameter dieser Entkopplungseinrichtung 31 werden abhängig von der Drehzahl n des Rotors 10 verändert.

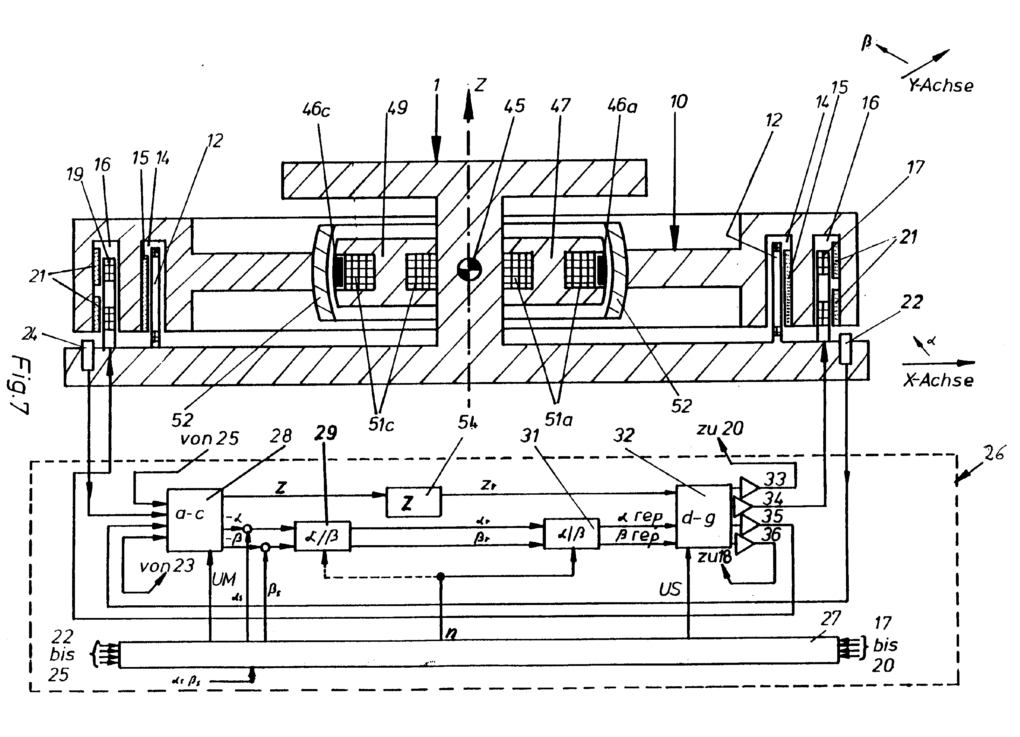

Die Entkopplung kann in zwei unterschiedlichen Versionen ausgeführt werden Eine Version bedingt,daß die Parameter der Kippregler 29 unabhängig von der Drehzahl n des Rotors 10 sind. Bei der anderen Version werden die Parameter der Kippregler 29 in Abhängigkeit von der Drehzahl n des Rotors 10 verändert. (In den Figuren 1 und 7 werden beide Versionen durch eine gestrichelte Linie vom Verzweigungspunkt n zu den Kippreglern 29 dargestellt.)

Durch eine geeignete Verknüpfung in der Additionseinheit 32 werden aus den drei Signalen zr,αrep und βrep redundant Sollwerte für vier um 90 Grad versetzte Kräftein Z-Richtung auf den Umfang des Rotors 10 berechnet.

Diese werden dann mit Hilfe von stromeinprägenden Leistungsverstärkern 33 bis 36, die Ströme in den Regelspulen 17 bis 20 erzeugen,in Kräfte umgesetzt, so daß die gewünschten Axialkräfte und Kippmomente entstehen. Durch ein Umschaltsignal US, das in einer Plausibilitätskontrolle der vier Spulenströme in der Adaptions- und Uberwachungseinheit 27 entsteht, wird im Falle einer Störungin einem der vier Leistungsverstärker 33 bis 36 oder einer der vier Regelspulen 17 bis 20 auf eine Stromsteuerung mit den drei verbleibenden funktionsfähigen Leistungsverstärkern mit den zugehörigen Regelspulen umgeschaltet, wobei die Ströme nach dem Umschalten so bemessen sein müssen, daß die gleichen Kippmomente bzw. die gleichen axialen Kräfte auf den Rotor 10 ausgeübt werden. Zur Anpassung und Überwachung werden der Adaptions- und Überwachungseinheit 27 die Signale der Regelspulen 17 bis 20, der Abstandssensoren 22 bis 25 sowie die Sollwerte $\alpha_s$, $\beta_s$ zugeführt.

In Fig. 2 wird der linke Lagerteil der senkrechten Schnittdarstellung des Lagers nach Fig . 1 detailliert gezeigt. Mit 14 und 16 sind die beiden ringförmigen rotorluftspalte bezelchnet. In den inneren rotorluftspalt 14 ragt die am Stator 1 befestigte Dämpferspule 11 und die ebenfalls am Stator 1 befestigte Motorspule 12 hinein. Am äußeren Radius desinneren ringförmigen Rotorluftspalts 14 befindet sich ein in Umfangsrichtüng alternierend radial magnetisierter Permanentmagnetring 15, dessen magnetischer Fluß von der Dämpferspule 11 und von der Motorspule 12 genutzt wird.

Im äußeren ringförmigen Rotorluftspalt 16 sind die Regelspulen 17 bis 20 untergebracht. Am äußeren Radius desäußeren Rotorluftspalts 16 sind übereinander zwei entgegengesetzt magnetisierte Permanentmagnetringe 21 angeordnet, die einen magnetischen Fluß $\varnothing R$ erzeugen, der die Regelspulen 17 bis 20 durchsetzt.

Fig. 3 zeigt die vier Regelspulen 17 bis 20, die sich jeweils über 90° des mittleren äußeren Rotorluftspalts 16 erstrecken und so am Stator 1 befestigt sind, daß sich die Regelspulen 17 und 19 um 180° gegeneinander versetzt auf der X-Achse (siehe auch Fig. 1) und die Regelspulen 18 und 20 um 180° gegeneinander versetzt auf der Y-Achse (siehe auch Fig. 1) des Lagers befinden.

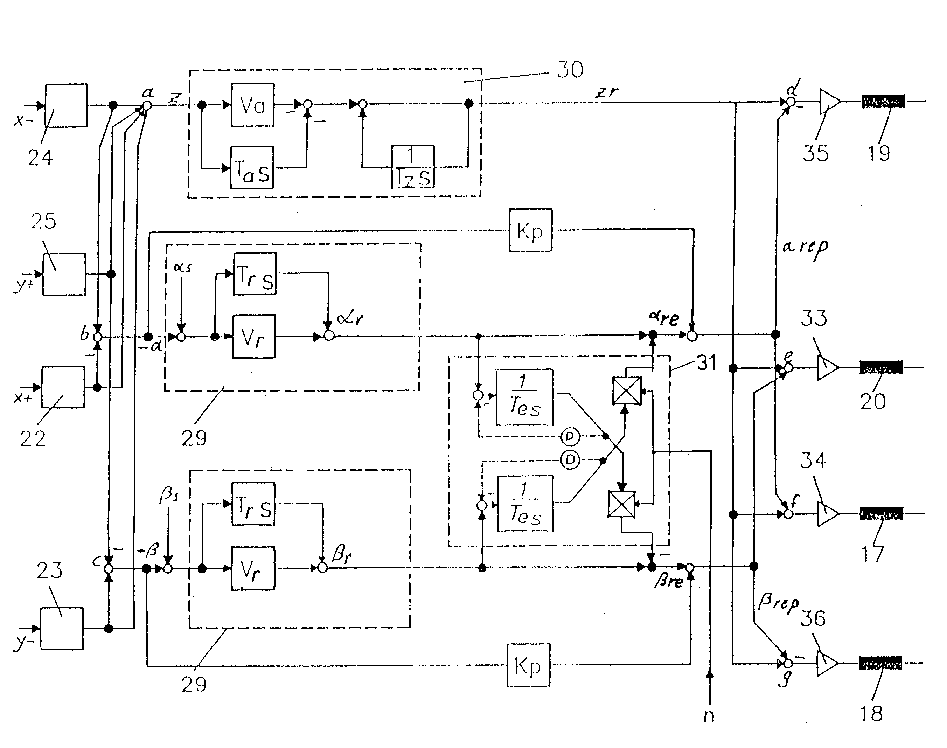

Fig. 4 zeigt das detaillierte Regelprinzip in einem blockschaltbild mit nicht drehzahlabhängiger Anderung der Kippregler-Parameter Die Signale der Abstandssensoren 22 bis 25 ergeben addiert die axiale Auslenkung z. Das Signal des Abstandssensors 24 minus dem Signal des Abstandssensors 22 ergibt den negativen Kippwinkel $\alpha$ (Additionspunkt b) und das Signal des Abstandssensors 23 minus dem Signal des Abstandssensors 25 ergibt den negativen Kippwinkel $\beta$ (Additionspunkt c).

Die Signale der Abstandssensoren 22 bis 25 werden addiert (Additions-punkt a) und als axial Auslenkunge z in einem Proportional-Differential-Regler mit zusätzlicher Zero-Power-Regelung 30 zu dem Ausgangssignal zr verarbeitet, das gleichzeitig auf alle vier Leistungsverstärker 33 bis 36 gegeben wird, deren Ausgangssignalen zu den Regelspulen 17 bis 20 geführt werden. Die Regelabweichungen der $\alpha$- und $\beta$-Verschwenkungen werden von Proportional-Differential-Reglern 29 mit den Parametern $V_r$ (Gesamt-Regler-Verstärkung) und $T_r$ (Gesamt-Regler-Zeitkonstante) zu den Signalen und $\beta$r verarbeitet.

Die Ausgangssignale der Kippregler 29 $\alpha$r und ßr werden durch eine integrale, in ihre Zeitkonstanter $T_n$ umgekehrt drehzahlproportional nachgeführte,wechselseitige Vorwärtsverkopplung miteinander verknüpft, die die durch die Kreiseleffekte verursachte Verkopplung der Kippachsen X und Y des Rotors 10 aufhebt. Damit wird eine Nutationsschwingung verhindert; $T_n = T_e/2\pi n$.

Die Integrationszeitkonstante $T_e$ der Entkopplungseinrichtung 31 ist das Verhältnis von Axial- zu Kippträgheitsmoment des Rotors 10. Fall ims Zentrallager (1 bis 10) eine passive Kippdämpfung existiert, so kann diese mit dem Faktor D berücksichtigt werden.

Das passive Kippmoment des Zentrallagers (1 bis 10) wird, soweit vorhanden, durch den Faktor Kp, der aus der Kippauslenkung ein entsprechendes Gegenmoment ableitet, neutralisiert. Damit wird eine Präzessionsschwingung verhindert Eine nichtlineare Kippmomentencharakteristik kann durch eine inverse Kennlinie $K_p = f (\alpha)$ bzw. $K_p = f (\beta)$ kompensiert werden.

Über die Addtionspunkte d, f und e, g werden die Signale $\alpha_{rep}$ und $\beta_{rep}$ den entsprechenden Leistungsverstärkern 34, 35; 33, 36 und den Regelspulen 7, 19; 18, 20 zugeführt.

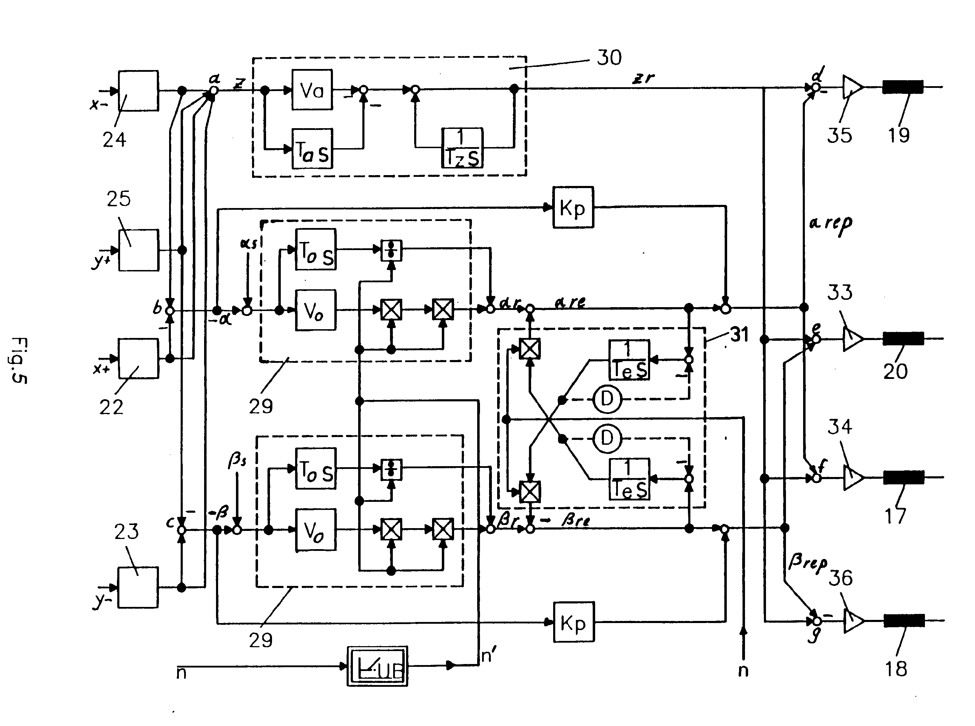

Fig. 5 zeigt das detaillierte Regelprinzip einer Weiterbildung in einemblockschaltbild mit drehzahlabhängiger Änderung der Kippregler-Parameter.Das Regelprinzip nach Figur 5 unterscheidet sich von dem Reglerprinzip nach Figur 4 nur im Bereich der Regler 29 und der Entkopplung 31, deswegen wird hier nur auf die Unterschiede zur Figur 4 eingegangen.

Die Regelabweichungen der $\alpha$- und $\beta$-Verschwenkungen werden von nunmehr adaptiven Proportional-Differential-Reglern 29 zu den Signalen $\alpha$r und ßr verarbeitet. Die Verstärkung $V_r = V_o \cdot n^2$ dieser Kippregler wird proportional zum Quadrat der Drehzahl n verändert. Die Zeitkonstante $T_r = T_e/n$ der Kippregler 29 wird urgekehrt proportional zur Drehzahl n nachgeführt Damit werden jetzt die Kippregler 29 an die sich mit der Drehzahl n ändernden Eigenschaften der jetzt rückwärts-entkoppelten Kippregelstrecken angepaßt.

Die Kippregleradaption wird unterhalb einer Minimaldrehzahl Ub ausgesetzt, die Parameter bleiben in diesem Bereich konstant, $V_r = V_o$, $T_r = T_o$.

Die Ausgangssignale der Kippregler 29 αr und βr werden durch eine integrale, in ihrer Zeitkonstante $T_n$ umgekehrt drehzahlproportional nachgeführte,wechselseitige Rickwirtsverkopplung miteinander verknüpft, die die durch die Kreiseleffekte verursachte Verkopplung der Kippachsen X und Y des Rotors 10 aufhebt. Damit wird eine Nutationsschwingung verhindert; $T_n = T_e/2\pi n$. Die Integrationszeitkonstante $T_e$ der Entkopplungseinrichtung 31 ist wiederum das Verhältnis von Axial- zu Kippträgbeitsmoment des Rotors 10. Falls im Zentrallager (1 bis 10) eine passive Kippdämpfung existiert, so kann diese mit dem Faktor D berücksichtigt werden. Ein kleiner Anteil von D ist jedoch stets zur Vermeidung einer Dauerschwingung in der Entkopplung vorzusehen.

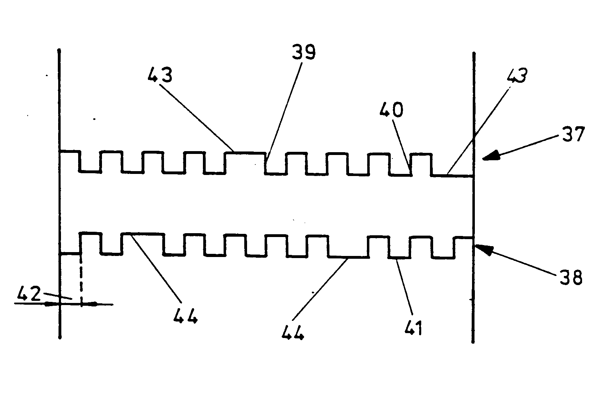

In Fig 6 wird ein Ausführungsbeispiel einer Dämpferspule 11 in einer Abwicklung über 360° gezeigt. Mit 37 und 38 sind in diesem Beispiel zwei unabhängige mäanderförmige Drähte bezeichnet Die Dämpferspule 11 kann auch aus jedem anderen geradzahligen Vielfachen von Drähten gebildet werden.

Die ansteigenden und abfallenden Anteile 40, 39 des Mäanders sind parallel zur Rotorachse ausgerichtet und im wesentlichen den alternierenden Permanentmagneten des Permanentmagnetrings 15 gegenüber angeordnet Die dazu senkrechten Anteile 41 des Mäanders verlaufen axial versetzt außerhalb der Permanentmagnete. Die Breite 42 eines Mäanders entspricht einer Polbreite eines Magneten des Permanentmagnetrings 15.

Auf dem 360°-Umfang der Dämpferspule 11 sind für beide Drähte 37, 38 jeweils zwei um 180° versetzte Mäander doppelter breite 43, 44 vorgesehen, die von Draht 37 zu Draht 38 außerdem noch einen Versatz von 90° aufweisen Hierdurch wird erreicht, daß die Mäander von 0° bis 180° und von 180° bis 360° bei Draht 37 bzw. von 90° bis 270° und von 270° bis 90° bei Draht 38 unterschiedlichen Magnetpolen gegenüberstehen. Dadurch wird erreicht, daß die Dämpferspule 11 bei Drehung des Rotors 10 kein Bremsmoment, bei translatorischen Bewegungen des Rotors 10 jedoch eine Bremskraft erzeugt.

Fig. 7 zeigt eine Weiterbildung des Lagers nach Fig. 1 mit aktivem Zentrallager.

Der Stator ist mit 1, der Rotor mit 10 und die Steuer- und Regeleinheit mit 26 bezeichnet.

Der Stator 1 trägt zentral ein aktives radiales Lager 1, 10, 45 bis 52, welches in einem am Rotor 10 befestigten kugelsymmetrischen tonnenförmigen Körper 52, aus weichmagnetischem Material als magnetischen Rückschluß, untergebracht ist. Der tonnenförmige Körper 52 hat den Schwerpunkt 45 des Rotors 10 als Mittelpunkt.

Am Stator 1 sind am äußeren Umfang, gegenüber dem magnetischen Rückschluß 52 des Rotors 10, vier Elektroden 46a bis 46d auf der X- und auf der Y-Achse um jeweils 90° versetzt angeordnet, die zusammen mit dem Rotor 10 und den Jocheisen 47 bis 50 kapazitive Abstandssensoren bilden. Hierbei dienen die Jocheisen 47 bis 50 als Sendeelektroden, der Rotor 10 als Reflexionselektrode und die Elektroden 46a bis 46d als Empfangselektroden.

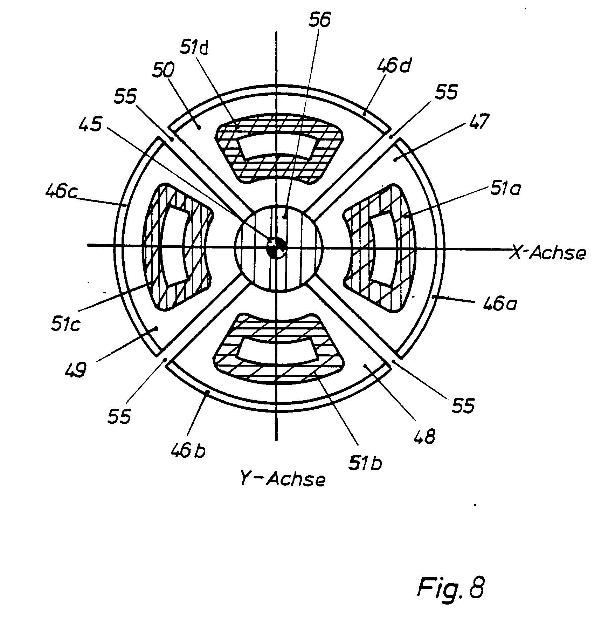

Ebenfalls auf der X- und auf der Y-Achse sind vier um jeweils 90° versetzte Spulen 51a bis 51d angeordnet Die Jocheisen 47 bis 50, die Spulen 51a bis 51d und der kugelsymmetrische tonnenförmige Körper 52 bilden vier um 90° versetzte, magnetisch getrennte, Elektromagnet-Segmente, die paarweise gegenüberliegend und unabhängig voneinander aktiviert werden können Die magnetische Trennung kann z. B dadurch erreicht werden, daß die Elektromagnet-Segmente durch Luftpalte 55 (Fig. 8) voneinander getrennt sind und der Lagerdorn 56 (Fig. 8) aus einem niedrigpermeablen Material heragestellt wird.

Ein radiale Bewegung des Rotors 10 gegenüber dem Stator 1 entlang der X- und/oder der Y-Achse wird durch die kapazitiven Sensoren 10, 46a bis 46d, 47 bis 50 aufgenommen und durch die Elektromagnet-Segmente 47 bis 50, 51a bis 51d, 52 zurückgestellt. Selbstverständlich können auch induktive Sensoren, optische Sensoren oder Sensoren die auf einem anderen Meßprinzip beruhen, verwendet werden.

Die Fig. 8 zeigt eine waagerechte Schnittdarstellung des aktiven radialen Zentrallagers. Das am Stator 1 angebrachte ruhende Teil des Zentrallagers bestehend aus vier, z. B durch Luftpalte 55, magnetisch voneinander getrennten 90° Elektromagnet-Segmenten aus Jocheisen 47 bis 50 mit den Spulen 51a bis 51d und einem sich im Zentrum des Rotors 10 befindlichen tonnenförmigen Körper 52 (Fig. 7) aus weichmagnetischem Material als magnetischem Rückschluß. Die Elektromagnet-Segmente 47, 51a, 52; 49, 51c, 52; 48, 51b, 52; 50, 51d, 52 sind ebenso wie die Elektroden 46a bis 46d symmetrisch in den X- und Y-Achsen angeordnet, wobei der Schwerpunkt 45 den Mittelpunktbildet. Der Lagerdorn 56 ist zur magnetischen Trennung aus einem niedrigpermeablen Material, z. B. aus Aluminium, hergestellt.

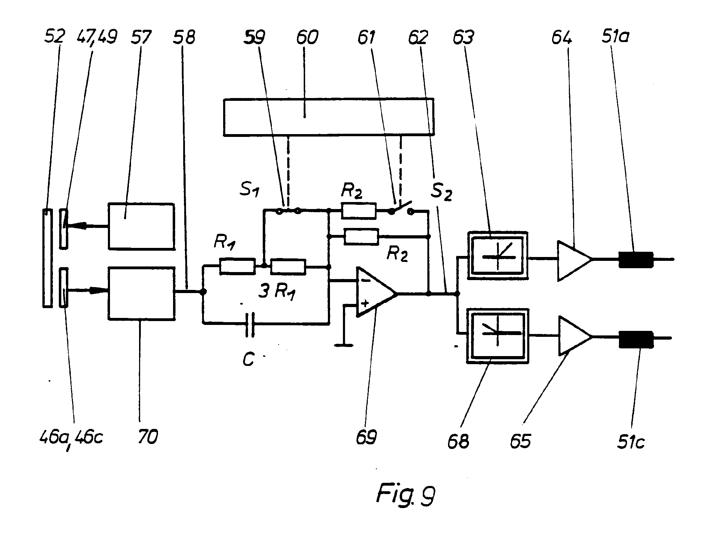

Fig. 9 zeigt das Regelprinzip einer Achse aktivendes radialen Zentrallagers Die Jocheisen 47, 49 werden von einem Oszillator 57 erregt. Die kapazitiven Sensoren 46a, 46c, 47, 49, 52, erfassen eine radiale Positionsänderung des Rotors 10 gegenüber dem Stator 1 als eine Kapazitätsänderung und führen sie der Sensor-Auswerteelektronik 70 zu.

Als Lageistwert 58 des Sensorpaares 46a, 46c gelangt das Ausgangssignal der Sensor-Auswerteelektronik 70 zu der Eingangsbeschaltung C, $R_1$, $3R_1$, $S_1$ des Proportional-Differential-Reglers 69. Die Reglerparameter des Proportional-Differential-Reglers 69 können von einer übergeordneten Überwachungs- und Steuereinheit 60 zwischen 'weicher' und 'harter' Regelung umgeschaltet werden. Dies ist dann von Vorteil, wenn starke radiale Störungen erwartet werden - hier wird ein 'hartes' Regelverhalten bevorzugt - oder wenn Unwuchtstörungen nur in möglichst geringer Urfang auf den Stator übertragen werden sollen - hier wird ein weiches Regelverhalten bevorzugt-. Das 'harte' Regelverhalten wird dadurch erreicht, daß der Schalter $S_1$ geschlossen und der Schalter $S_2$ geöffnet wird. Das 'weiche' Regelverhalten wird dadurch erreicht, daß der Schalter $S_1$ geöffnet und der Schalter $S_2$ geschlossen wird Das Ausgangssignal des Proportional-Differential-Reglers 69 wird über stromeinprägende Leistungs-verstärker 64, 65 alternativ in der Spule 51a oder 51c in radiale Kräfte auf den Rotor 10 umgesetzt.

## Patentansprüche

1. Lager zur radialen und axialen Lagerung eines Rotors mit großer radialer Ausdehnung an einem Stator mit einer Stabilisierung des Rotors um dessen Kippachsen, enthaltend den beiden Kippachsen zu geordnete Sensoren zur Ermittlung der Kippwinkel und den Sensoren nachgeschaltete Proportional-Differential-Regler (PD-Regler) die Steuerströme für auf dem Stator angeordnete, den Kippachsen zugeordnete Spulen erzeugen, die in Verbindung mit Magneten auf dem Rotor Momente auf den Rotor im Sinne einer Beeinflussung der Kippwinkel ausüben, wobei die Regler wechselseitige Verkopplungen aüfweisen, die die durch die Kreiseleffekte verursachte Verkopplung der Kippachsen aufheben, dadurch gekennzeichnet, daß die Eingangssignale der wechselseitigen Verkopplungen (in 31) die Ausgangssignale der PD-Regler (29) sind, daß die wechselseitigen Verkopplungen (in 31) integralen Charakter mit zur Drehzahl n umgekehrt proportionalen Zeitkonstanten aufweisen, und daß die über die wechslseitigen Verkopplungen (in 31) geführten Signale zu den Ausgangssignalen ($\alpha_r$, $\beta_r$) der PD-Regler (29) addiert, bzw. von diesen subtrahiert werden.

2. Lager zur radialen und axialen Lagerung eines Rotors mit großer radialer Ausdehnung an einem Stator mit einer Stabilisierung des Rotors um dessen Kippachsen, enthaltend den beiden Kippachsen zu geordnete Sensoren zur Ermittlung der Kippwinkel und den Sensoren nachgeschaltete Proportional-Differential-Regler (PD-Regler), die Steuerströme für auf den Stator angeordnete den Kippachsen zuge ordnete Spulen erzeugen, die in Verbindung mit Magneten auf dem Rotor Momente auf den Rotor im Sinne einer Beeinflussun, der Kipp winkel ausüben, wobei die Regler wechselseitige Verkopplungen auf weisen, die die durch die Kreiseleffekte verursachte Verkopplung der Kippachsen aufheben, dadurch gekennzeichnet, daß die über die wechselseitigen Verkopplungen (in 31) geführten Signale zu den Ausgangssignalen ($\alpha_r$, $\beta_r$) der PD-Regler (29) addiert, bzw von diesen subtrahiert werden und daß die Eingangssignale der wechselseitigen Verkopplungen (in 31) die Ausgangssignale der durch die Addition bzw Subtraktion entstehenden Signale ($\alpha_{re}$, $\beta_{re}$) sind, daß die die wechselseitigen Verkopplungen (in 31) integralen Charakter mit zur Drehzahl n umgekehrt proportionalen Zeitkonstanten aufweisen, daß die Verstärkung $V_r$ der PD-Regler (29) proportional zum Quadrat der Drehzahl n des Rotors (10) und deren Zeitkonstante $T_r$ umgekehrt proportional zur Drehzahl n des Rotors (10) geändert wird, daß die PD-Regler (29) bis zu einer vorgegebenen Mindestdrehzahl eine konstante Verstärkung Vo und eine konstante Zeitkonstante To aufweisen und erst ab dieser Mindestdrehzahl drehzahlabhängig sind.

3. Lager nach Anspruch 1 oder 2, dadurch gekennzeichnet, daß die Integrationszeitkonstante $T_e$ der wech-selseitigen Verkopplungen (in 31) dem Verhältnis von Axial- zu Kippträgheitsmoment des Rotors (10) proportional ist.

4. Lager nach einem der Ansprüche 1 bis 3, dadurch gekennzeichnet, daß jeder Kippachse X, Y zwei gegeneinander geschaltete Abstandssensoren (22, 24; 23, 25) auf dem Stator 1 zugeordnet sind.

5. Lager nach einem der Ansprüche 1 bis 4, dadurch gekennzeichnet, daß jeder Kippachse X, Y zwei Regelspulen (17, 19; 18, 20) auf dem Stator (1) zugeordnet sind.

6. Lager nach einem der Ansprüche 1 bis 5, dadurch gekennzeichnet, daß auf dem Rotor (10) parallel zur Drehachse (Z) eine Vielzahl von Permanentmagneten (in Ring 15) angeordnet sind, wobei jeweils benachbarte Permanentmagnete (in Ring 15) unterschiedliche Polarität aufweisen und-daß diesen Permanentmagneten (in Ring 15) gegenüberliegend eine wenigstens zweiphasige Motorspule (12) auf dem Stator (1) angeordnet ist.

7. Lager nach Anspruch 6, dadurch gekennzeichnet, daß jede Phase der Motorspule (12) aus einem mäanderförmig aufgebrachten Draht (37, 38) gebilder ist, wobei die ansteigenden und abfallenden Anteile (39,40) des Mäanders parallel zur Rotorachse (Z) ausgerichtet sind und im wesentlichen den Permanentmagneten (in Ring 15) gegenüberliegen, während die dazu senkrechten Anteile (13) axial versetzt außerhalb der Permanentmagnete (in Ring 15) verlaufen und daß die Breite des Mäanders der Polteilung entspricht.

8. Lager nach einem der Ansprüche 1 bis 7, dadurch gekennzeichnet, daß auf dem Rotor (10) parallel zur Drehachse (Z) eine Vielzahl von Permanentmagneten (in Ring 15) angeordnet sind, wobei jeweils benachbarte Permanentmagnete (in Ring 15) unterschiedliche Polarität aufweisen und daß den Permanentmagneten (in Ring 15) gegenüberliegend wenigstens eine Dämpferspule (11) angeordnet ist, die aus wenigstens zwei unabhängigen mäanderförmig aufgebrachten Drähten (37,38) gebildet ist, wobei die ansteigenden und abfallenden Anteile des Mäanders parallel zur Rotorachse (Z) ausgerichtet sind und im wesentlichen den Permanentmagneten (in Ring 15) gegenüberliegen, während die dazu senkrechten Anteile (13) axial versetzt außerhalb der Permanentmagnete (in Ring 15) verlaufen, wobei diese Breite des Mäanders einer Polteilung entspricht und daß diese teilweise derart versetzt angeordnet sind, daß die Drehung des Rotors (10) in diesen kein Bremsmoment erzeugt, jedoch translatorischen Bewegungen eine Dämpfungskraft für diese Bewegung entsteht.

9. Lager nach den Ansprüchen 7 und 8, dadurch gekennzeichnet, daß die Motorspule (12) und die Dämpferspule (11) den gemeinsam genutzten Permanentmagneten (in Ring 15) gegenüberstehen.

10. Lager nach einem der Ansprüche 1 bis 4, dadurch gekennzeichnet, daß die radiale Lagerung durch wenigstens ein Magnetlager gebiliet wird.

11. Lager nach Anspruch 10, dadurch gekennzeichnet, daß die radiale Lagerung durch ein passives Magnetlager bewirkt wird.

12. Lager nach einem der Ansprüche 10 oder 11, dadurch gekennzeichnet, daß eine'sensierte axiale Verschiebung des Rotors (10) über einen PD-Regler (30) parallel den zur Kippregelung vorgesehenen Regelspulen (17 bis 20) zugeführt wird.

13 Lager nach Anspruch 12, dadurch gekennzeichnet, daß bei Verwendung von den Kippachsen X, Y zugeordneten Paaren von Abstandssensoren (22, 24; 23, 25) zur Kippwinkelerfassung diese auch als Sensoren für die Axialregelung verwendet werden.

14. Lager nach Anspruch 10, dadurch gekennzeichnet, daß die den Kippachsen X, Y zugeordneten verknüpften Sensorsignale mit einem Faktor Kp versehen den den entsprechenden Regelspulen (17,19; 18,20) zuseführten Signalen ($\alpha_{re}$, $\beta_{re}$) überlagert werden.

15. Lager nach den Ansprüchen 10 und 14, dadurch gekennzeichnet, daß die von der Drehzahl n des Rotors (10) unabhängigen integralen wechselseitigen Verkopplungssignale mit dem Faktor D versehen auf den Eingang der zugehörigen Verkopplungssignale zurückgeführt werden.

16. Lager nach einem der vorgenannten Ansprüche, dadurch gekennzeichnet, daß die Regelspulen (17 bis 20) und die Permanentmagnetringe (21) zur Erzeugung des Kippmomentes am äußeren Umfang angebracht sind.

17. Lager nach einem der vorgenannten Ansprüche, dadurch gekennzeichnet, daß die Struktur der Verknüpfung der vier Abstandssensorsignale durch eine Adaptions- und Überwachungseinheit (27) so umge schaltet werden kann, daß bei einem Ausfall eines dieser vier Abstandssensoren (22 bis 25) mit den von der Adaptions- und Überwachungseinheit (27) zu ermittelnden verbleibenden drei funktionsfähigen Abstandssensoren die gleichen Eingangssignale für die drei Regler (29, 30) gebildet werden.

18. Lager nach einem der vorgenannten Ansprüche, dadurch gekennzeichnet, daß die Struktur der Verknüpfung (in 32) der aus den Sensorsignalen gewonnenen Regelsignale ($\alpha_{rep}$, $\beta_{rep}$, zr) durch die Adaptions- und Uberwachungseinheit (27) so umschaltbar ist, daß bei einem Ausfall einer der vier Leistungsverstärker (33 bis 36) und/oder Regelspulen (17 bis 20) mit den von der Adaptions- und Uberwachungseinheit (27) zu ermittelnden drei verbleibenden funktionsfähigen Leistungsverstärkern mit den zugehörigen Regel spulen die gleichen axialen Kräfte und die gleichen Momente auf den Rotor (10) ausgeübt werden.

19. Lager nach Anspruch 10, dadurch gekennzeichnet, daß der Rotor (10)an dem Stator (1) mittels eines aktiven Zentrallagers (1, 10, 45 bis 52) gelagert ist, wobei wenigstens zwei der X- und Y-Achse zugeordnete Sensoren, bestehend aus Jocheisen (47 bis 50), magnetischem Rücksctuß (52) und Elektroden (46), die radiale Position des Rotors (10) erfassen und ihr Ausgangssignal über Leistungverstärker (64 bis 67) zur Ausregelung von vom Zentrum des Lagers radial abweichende Rotor-Positionen jeweils nur einer in jeder Achse angeordneten Spule (51) zur Bildung eines Magnetfeldes zugeführt werden.

20. Lager nach Anspruch 19, dadurch gekennzeichnet, daß der magnetische Rückschluß (52) des Rotors (10) tonnenförmig ausgebildet ist.

21. Lager nach Anspruch 19, dadurch gekennzeichnet, daß die Spulen (51a bis 51d) in magnetisch voneinander getrennten 90°-Sektoren angeordnet sind.

22. Lager nach Anspruch 1 oder 2, dadurch gekennzeichnet, daß die Sensoren (46 bis 50, 52) kapazitive oder induktive Sensoren sind.

23. Lager nach Anspruch 1 oder 2, dadurch gekennzeichnet, daß die Parameter Verstärkung und Zeitkonstante des Reglers (69) umschaltbar sind.

24. Lager nach einem der Ansprüche 1 bis 5, dadurch gekennzeichnet, daß auf dem Rotor (10) zwei axial gegeneinander versetzte Permanentmagnetringe (21) unterschiedlicher Polarität vorgesehen sind und daß diesen Permanentmagnetringen (21) vier gleichmäßig über den Umfang verteilte mit dem Stator (1) verbundene Regelspulen (17 bis 20) gegenüber stehen von denen jeweils gegenüberliegende Regelspulen (17, 19; 18, 20) mit einem der Kippregler (29) derart verbunden sind, daß sie bei einer Verkippung Rückstellmomente auf den Rotor (10) ausüben.

**Revendications**

1. Palier pour supporter radialemenet et axialemnent un rotor de grande étendue radiale sur un stator, avec une stabilisation du rotor autour de ses axes d'inclinaison, contenant des capteurs coordonnés aux deux axes d'inclinaison pour déterminer les angles d'incliaison et des régulateurs proportionnels et par dérivation (régulateurs PD) montés à la suite des capteurs et qui génèrent des courants de commande pour des bobines disposées sur le stator et coordonnées aux axes d'inclinaison, bobines qui, en combinaison avec des aimants prévus sur le rotor, exercent des couples sur lerotor dans le sens d'une influence sur les angles d'inclinaison, les régulateurs présentant des couplages réciproques qui suppriment le couplage provoqué par les effets gyroscopiques des axes d'incliaison, <u>caractérisé en ce</u> que les signaux d'entrée des couplages réciproques (en 31) sont les signaux de sortie des régulateurs PD (29),les que couplages réciproques (en 31) ont un caractère intégral avec des constantes de temps inversement proportionnelles à la vitesse de rotation n, et que les signaux amenés à passer par les couplages réciproques (en 31), sont additionnés aux signaux de sortie ($\alpha_r$, $\beta_r$) des régulateurs PD (29) ou sont déduits de ces signaux de sortie.

2. Palier pour supporter radialement et axialement rotor de grande étendue radiale sur un stator, avec une stabilisation d'un rotor autour de ses axes d'inclinaison, contenant des capteurs coordonnés aux deux axes d'inclinaison pour déterminer les angles d'inclinaison et des régulateurs proportionnels et par dérivation (régulateurs PD) montés à la suite des capteurs et qui génèrent des courants de commande pour des bobines disposées sur le stator et coordonnées aux axes d'inclinaison, bobines qui, en combinaison avec des aimants prévus sur le rotor, exercent des couples sur le rotor dans le sens d'une influence sur les angles d'inclinaison, les régulateurs présentant des couplages réciproques qui suppriment le couplage provoqué par les effets gyroscopiques des axes d'inclinaison, <u>caractérisé en ce</u> que les signaux amenés à passer par les couplages réciproques (en 31), sont additionnés aux signaux de sortie ($\alpha_r$, $\beta_r$) des régulateurs PD (29) ou sont déduits de ces signaux de sortie et que les signaux d'entrée des couplages réciproques (en 31) sont les signaux de sortie des signaux ($\alpha_{re}$, $\beta_{re}$) produits par l'addition ou la soustraction, que les couplages réciproques (en 31) présentent un caractère intégral avec des constantes de temps inversement proportionnelles à la vitesse de rotation, que le gain $V_r$ des régulateurs PD (29) est varié proportionnellement au carré de la vitesse de rotation n du rotor (10) et leur constante de temps $T_r$ est changée de façon inversement proportionnelle à la vitesse de rotation n du rotor (10), et que les régulateurs PD (29) ont un gain constant Vo et une constante de temps To constante jusqu'à une vitesse de rotation minimale préfixée, et sont seulement dépendants de la vitesse de rotation à partir de cette vitesse minimale.

3. Palier selon la revendication 1 ou 2, caractérisé en ce que la constante de temps d'intégration $T_e$ des couplages réciproques (en 31) est proportionnelle au rapport du moment d'inertie axial au moment d'inertie d'inclinaison du rotor (10).

4. Palier selon une des revendications 1 à 3, caractérisé en ce que deux capteurs de distance ou de proximité (22, 24; 23, 25) montés en opposition, sont coordonnés à chacun des axes d'inclinaison X, Y et sont disposés sur le stator (1).

5. Palier selon une des revendications 1 à 4, caractérisé en ce que deux bobines de régulation (17, 19; 18, 20) sont coordonnées à chacun des axes d'inclinaison X, Y et sont disposées sur le stator (1).

6. Palier selon une des revendications 1 à 5, caractérisé en ce qu'un grand nombre d'aimants permanents (dans l'anneau 15) sont disposés parallèles à l'axe de rotation (Z) sur le rotor (10), de manière que les aimants voisins (dans l'anneau 15) présentent des polarités différentes, et qu'une bobine motrice (12) au moins biphasée est disposée sur le stator (1) en regard de ces aimants permanents (dans l'anneau 15).

7. Palier selon la revendication 6, caractérisé en ce que chaque phase de la bobine motrice (12) est formée d'un fil (37, 38) disposé en grecques, de manière que les portions montantes et descendantes (39, 40) des grecques soient orientées parallèlement à l'axe (Z) du rotor et disposées essentiellement en regard des aimants permanents (dans l'anneau 15), tandis que les portions (13) perpendiculaires à elles s'étendent avec un décalage axial à l'extérieur des aimants permanents (dans l'anneau 15), et que la largeur des parties rectangulaires des grecques correspond au pas polaire.

8. Palier selon une des revendications 1 à 7, caractérisé en ce qu'un grand nombre d'aimants permanents (dans l'anneau 15) sont disposés parallèlement à l'axe de rotation (Z) sur le rotor (10), de manière que les aimants permanents (dans l'anneau 15) voisins présentent des polarités différentes, et qu'une bobine d'amortissement (11) est disposée en regard des aimants permanents (dans l'anneau 15), bobine qui est formée d'au moins deux fils indépendants (37, 38) disposés en grecques, de manière que les portions montantes et descendantes des grecques soient orientées parallèlement à l'axe (Z) du rotor et situées essentiellement en regard des aimants permanents (dans l'anneau 15), tandis que les portions (13) perpendiculaires à elles s'étendent avec un décalage axial à l'extérieur des aimants permanents (dans l'anneau 15), la largeur des parties rectangulaires des grecques correspondant à un pas polaire, et que ces parties rectangulaires sont partiellement décalées mutuellement, de manière que la rotation du rotor (10) ne génère pas de couple de freinage en elles, mais que, lors de mouvements de translation, une force d'amortissement de ces mouvements soit produite.

9. Palier selon les revendications 7 à 8, caractérisé en ce que la bobine motrice (12) et la bobine d'amortissement (11) font face aux aimants permanents (dans l'anneau 15) employés en commun.

10. Palier selon une des revendications 1 à 4, caractérisé en ce que le support radial est assuré par au moins un palier magnétique.

11. Palier selon la revendication 10, caractérisé en ce que le support radial est assuré quai un palier magnétique passif.

12. Palier selon la revendication 10 ou 11, caractérisé en ce qu'un déplacement axial détecté du rotor (10), est appliqué en parallèle, à travers un régulatéur PD (30), aux bobines de régulation (17 à 20) prévues pour la régulution de l'inclinaison.

13. Palier selon la revendication 12, caractérisé en ce que, en cas d'utilisation de paires de capteurs de distance (22, 24; 23, 25) coordonnées aux axes d'inclinaison X, Y, pour la détermination des angles d'inclinaison, ces capteurs sont utilisés également comme des capteurs jour la régulation axiale.

14. Palier selon la revendicaiion 10, caractérisé en ce que les signaux de capteurs coordonnés aux axes d'incliaison X, Y sont combinés, pourvus d'un facteur KP et superposés aux signaux ($\alpha_{re}$, $\beta_{re}$) envoyés aux bobines de régulation (17, 19; 18, 20) correspondantes.

15. Palier selon les revendications 10 et 14, caractérisé en ce que les signaux du couplage réciproque intégral, indépendant de la vitesse de rotation n du rotor (10), sont pourvus d'un facteur D et appliqués en rétroaction à l'entrée des signaux de couplage correspondants.

16. Palier selon une des revendications précédentes, caractérisé en ce que les bobines de régulation (17 à 20) et les anneaux à aimants permanents (21) pour la génération du couple d'inclinaison, sont disposés à la périphérie extérieure.

17. Palier selon une des revendications précédentes, caractérisé en ce que la structure de la combinaison des singnaux des quatre capteurs de distance est commutable par une unité d'adaptation et de surveillance (27), de manière que, en cas de défaillance d'un de ces quatre capteurs (22 à 25), les mêmes signaux d'entrée pour les trois régulateurs (29, 30) soient produits par les trois capteurs restant en fonctionnement, lesquels sont à dêterminer par l'unité d'adaptation et de surveillance (27).

18. Palier selon l'une des revendications précédentes, caractérisé en ce que la structure de la combinaison (en 32) des signaux de régulation ($\alpha_{rep}$, $\beta_{rep}$, zr) obtenus à partir des signaux des capteurs, est commutable par l'unité d'adaptation et de surveillance (27) de manière que, lors d'une défaillance d'un des quatre amplificateurs de puissance (33 à 36) et/ou d'une des quatre bobines de régulation (17 à 20), les mêmes forces axiales et les mêmes couples soient exercés sur le rotor (10) par les trois amplificateurs de puissance restant en fonctionnement et qui sont à déterminer par l'unité d'adaptation et de surveillance (27), ensemble avec les bobines de régulation correspondantes.

19. Palier selon la revendication 10, caractérisé en ce que le rotor (10) est monté rotatif sur le stator (1) au moyen d'un palier central actif (1, 10, 45 à 52), dans une disposition où au moins deux des capteurs coordonnés aux axes X et Y et constitués de fers de culasse (47 à 50), d'un élément (52) de fermeture de circuit magnétique et d'électrodes (46), détectent la postion radiale du rotor (10), et leur signal de sortie est appliqué, à travers des amplificateurs de puissance (64 à 67), en vue de l'élimination, par la régulation des écarts de position radiale du rotor par rapport au centre du palier, seulement à une bobine (51) disposée sur chaque axe en vue de la création d'un champ magnétique.

20. Palier selon la revendication 19, caractérisé en ce que l'élément (52) de fermeture de circuit magnétique du rotor (10) est en forme de tonneau.

21. Palier selon la revendication 19, caractérisé en ce que les bobines (51a et 51d) sont agencées dans des secteurs de 90° qui sont magnétiquement séparés les uns des autres.

22. Palier selon la revendication 1 ou 2, caractérisé en ce que les capteurs (46 à 50, 52) sont des capteurs capacitifs ou inductifs.

23. Palier selon la revendication 1 ou 2, caractérisé en ce que les paramètres formés par le gain et la constante de temps du régulateur (69) sont commutables.

24. Palier selon une des revendications 1 à 5, caractérisé en ce que deux anneaux à aimants permanents (21) de différentes polarités sont prévus avec un décalage axial l'un par rapport à l'autre sur le rotor (10) et que ces anneaux à aimants permanents (21) sont disposés en regard de quatre bobines de régulation (17 à 20) uniformément réparties sur la périphérie et reliées au stator (1), dont les bobines de régulation (17, 19; 18, 20) situées chaque fois l'une en face de l'autre, sont connectées à l'un des régulateurs d'inclinaison (29) de manière qu'elles exercent des couples de rappel sur le rotor (10) lors d'une inclinaison.

**Claims**

1. Bearing for the radial and axial mounting of a rotor of great radial extent at a stator with a stabilisation of the rotor about its axes of tilt, the bearing containing sensors associated with both the axes of tilt for ascertaining the angles of tilt and proportional-differential regulators (PD-regulators), which are connected behind the sensors and produce control currents for coils which are associated with the axes of tilt and arranged on the stator and which in conjunction with magnets on the rotor exert moments on the rotor in the sense of an influence on the angles of tilt, wherein the regulators display reciprocal intercouplings which cancel the intercoupling of the axes of tilt caused by the gyrostatic effects, characterised thereby, that the input signals of the reciprocal intercouplings (in 31) are the output signals of the proportional-differential regulators (29), that the reciprocal intercouplings (in 31) display integral character with a time constant inversely proportional to the rotational speed n and that the signals conducted by way of the reciprocal intercouplings (in 31) are either added to or subtracted from the output signals $\alpha_r$, $\beta_r$) of the proportional-differential regulators (29).

2. Bearing for the radial and axial mounting of a rotor of great radial extent at a stator with a stabilisation of the rotor about its axes of tilt, the bearing containing sensors associated with both the axes of tilt for ascertaining the angles of tilt and proportional-differential regulators (PD-regulators), which are connected behind the sensors and produce control currents for coils which are associated with the axes of tilt and arranged on the stator and which in conjunction with magnets on the rotor exert moments on the rotor in the sense of an influence on the angles of tilt, wherein the regulators display reciprocal intercouplings which cancel the intercoupling of the axes of tilt caused by the gyrostatic effects, characterised thereby, that the signals conducted by way of the reciprocal intercouplings (in 31) are either added to or subtracted from the output signals ($\alpha_r$, $\beta_r$) of the proportional-differential regulators (29) and that the input signals of the reciprocal intercouplings (in 31) are the output signals of the signals ($\alpha_{re}$, $\beta_{re}$) that have arisen through either the addition or the subtraction, that the reciprocal intercouplings (in 31) display integral character with a time constant inversely proportional to the rotational speed n, that the amplification $V_r$ of the proportional-differential regulators (29) is proportional to the square of the rotational speed n of the rotor (10) and their time constant $T_r$ is altered in inverse proportion to the rotational speed n of the rotor (10), that the proportional-differential regulators (29) display a constant amplification Vo and a constant time constant To up to a preset minimum rotational speed and dependent on rotational speed only above this minimum rotational speed.

3. Bearing according to claim 1 or 2, characterised thereby, that the integration time constant $T_e$ of the reciprocal intercouplings (in 31) is proportional to the ratio of the axial moment of inertia of the rotor (10) to the moment of inertia of tilt of the rotor (10).

4. Bearing according to one of the claims 1 to 3, characterised thereby, that two oppositely connected spacing sensors (22, 24; 23, 25) on the stator (1) are associated with each axis of tilt X and Y.

5. Bearing according to one of the claims 1 to 4, characterised thereby, that two regulating coils (17, 19; 18, 20) on the stator (1) are associated with each axis of tilt X and Y.

6. Bearing according to one of the claims 1 to 5, characterised thereby, th at a plurality of permanent magnets (in ring 15) are arranged parallelly to the rotational axis (Z) on the rotor (10), wherein respectively adjacent permanent magnets (in ring 15) display different polarity and an at least two-phase motor coil (12) is arranged on the stator (1) to lie opposite these permanent magnets (in ring 15).

7. Bearing according to claim 6, characterised thereby, that each phase of the motor coil (12) is formed of a wire (37, 38) mounted in a meander shape, wherein the rising and falling portions (39, 40) of the meander are oriented parallelly to the rotor axis (Z) and lie substantially opposite the permanent magnets (in ring 15), whilst the portions (13) perpendicular thereto extend axially outside the permanent magnets (in ring 15), and that the width of the meander corresponds to the pole pitch.

8. Bearing according to one of the claims 1 to 7, characterised thereby, that a plurality of permanent magnets (in ring 15) are arranged parallelly to the rotational axis (Z) on the rotor (10), wherein respectively adjacent permanent magnets (in ring 15) display different polarity and at least on damping coil (11), which is formed of at least two independent wires (37, 38) mounted in meander shape, is arranged to lie opposite the permanent magnets (in ring 15), wherein the rising and falling portions of the meander are oriented parallelly to the rotor axis (Z) and lie substantially opposite the permanent magnets (in ring 15), whilst the portions (13) perpendicular thereto extend axially outside the permanent magnets (in ring 15), wherein the width of the meander corresponds to the pole pitch and that these are in part displaced in such a manner that the rotation of the rotor (10) produces no braking torque in these whilst a damping force however arises for transational movements.

9. Bearing according to the claims 7 and 8, characterised thereby, that the motor coil (12) and the damping coil (11) stand opposite the jointly utilised permanent magnets (in ring 15).

10. Bearing according to one of the claims 1 to 4, characterised thereby, that the radial bearing is formed by at least one magnetic bearing.

11. Bearing according to claim 10, characterised thereby, that the radial bearing is effected by a passive magnetic bearing.

12. Bearing according to one of the claims 10 and 11, characterised thereby, that a sensed axial displacement of the rotor (10) is fed by way of a proportional-differential regulator (30) parallelly to the regulating coils (17 to 20) provided for the regulation of tilting.

13. Bearing according to claim 12, characterised thereby, that in the case of the use of pairs of spacing sensors (22, 24; 23, 25) associated with the axes of tilt X and Y for the detection of the angle of tilt, these are also used as sensors for the axial regulation.

14. Bearing according to claim 10, characterised thereby, that the interlinked sensor signals, which are associated with the axes of tilt X and Y, are superimposed with a factor $K_p$ on the signals ($\alpha_{re}$, $\beta_{re}$) fed to the corresponding regulating coils (17, 19; 18, 20).

15. Bearing according to the claims 10 and 14, characterised thereby, that the integral reiprocal intercoupling signals, whichare independent of the rotational speed n of the rotor (10), are fed with a factor D back to the input of the associated intercoupling signals.

16. Bearing according to one of the aforementioned claims, characterised thereby, that the regulating coils (17 to 20) and the permanent magnet rings (21) for the production of the tilting moment are mounted at the outer circumference.

17. Bearing according to one of the aforementioned claims, characterised thereby, that the structure of the interlinking of the four spacing sensor signals can be so switched over by an adapting and monitoring unit (27) that - in the case of a failure of one of these four spacing sensors (22 to 25) - the same input signals for the three regulators (29, 30) are formed by the three functionally capable spacing sensors which remain and are to be ascertained by the adapting and monitoring unit (27).

18. Bearing according to one of the aforementioned claims, characterised thereby, that the structure of the interlinking (in 32) of the regulating signals ($\alpha_{rep}$, $\beta_{rep}$, zr) obtained from the sensor signals can be so switched over by the adapting and monitoring unit (27) that - in the case of a failure of one of the four power amplifiers (33 to 36) and/or the regulating coils (17 to 20) - the same axial forces and the same moments can be exerted on the rotor (10) by those three functionally capable power amplifiers with the associated regulating coils that remain and are to be ascertained by the adapting and monitoring unit (27).

19. Bearing according to claim 10, characterised thereby, that the rotor (10) is borne at the stator (1) by means of an active central bearing (1, 10, 45 to 52), wherein at least two of the sensors, which are associated with the X and Y axes and which consist of magnetic yokes (47 to 50), magnetic return circuit (52) and electrodes (46), detect the radial position of the rotor (10) and their output signals are fed by way of power amplifiers (64 to 67) each time to only one coil (51) arranged in each axis for the formation of a magnetic field for the correction of rotor positions departing radially from the centre of the bearing.

20. Bearing according to claim 19, characterised thereby, that the magnetic return circuit (52) of the rotor (10) is constructed in barrel shape.

21. Bearing according to claim 19, characterised thereby, that the coils (51a to 51d) are arranged in 90° sectors separated magnetically one from the other.

22. Bearing according to claim 1 or 2, characterised thereby, that the sensors (46 to 50, 52) are capacitive or inductive sensors.

23. Bearing according to claim 1 or 2, characterised thereby, that the parameters of amplification and time constant of the regulator (69) are capable of being switched over.

24. Bearing according to one of the claims 1 to 5, characterised thereby, that two permanent magnet rings (21), which are each displaced axially relative to the other and of different polarity, are provided on the rotor (10) and four regulating coils (17 to 20), which are uniformly distributed over the circumference and connected with the stator (1) and of which respectively opposite regulating coils (17, 19; 18, 20) are connected with one of the tilt regulators (29) in such a manner that they exert restoring moments on the rotor (10) in the case of a tilt, stand opposite these permanent magnet rings (21).

EP 0 419 476 B1

Fig 1

12

19 16 15 14 13 12 11    3 6 2    1    2 6 3    10 11 12 13 14 15 16    17

β
Y-Achse

α
X-Achse

Z

21    24    9 8    5    29    7    4    4    7    5    8 9    21    22

S N    N S    N S    S N
S N    N S    N S    S N

von 25    28    30    31    32    zu 20

z
a−c    −a    a/β    z    zr    α rep    d−g    33
    −β    αr    a/β    β rep    34
von    23    βr    35
    uM    36
    αs    βs    zu 18
    US

n

22
bis
25

αs, βs

17
bis
20

27

19   16   15   14   13   12   11

10

ØR

21

19

21

24

1

Fig.2

Fig. 3

Fig.4

Fig.5

Fig.6

*Fig.7*

Fig. 8

Fig. 9